(19) Europäisches Patentamt
European Patent Office
Office européen des brevets

(11) EP 3 540 109 B1

(12) # EUROPEAN PATENT SPECIFICATION

(45) Date of publication and mention of the grant of the patent:
**02.06.2021 Bulletin 2021/22**

(21) Application number: **17870954.9**

(22) Date of filing: **17.11.2017**

(51) Int Cl.:
***D04H 1/4382** (2012.01)*
***B32B 5/26** (2006.01)*
***D04H 1/4218** (2012.01)*
***D04H 1/4326** (2012.01)*
***D04H 1/541** (2012.01)*
***B60R 13/08** (2006.01)*
***B64C 1/40** (2006.01)*
***D04H 1/4334** (2012.01)*
***E04B 1/74** (2006.01)*

(86) International application number:
**PCT/JP2017/041501**

(87) International publication number:
**WO 2018/092888 (24.05.2018 Gazette 2018/21)**

(54) **SOUND-ABSORBING THERMAL-INSULATING MATERIAL**

SCHALL- UND WÄRMEDÄMMUNG

ISOLATION ACOUSTIQUE ET THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2016 JP 2016225291**

(43) Date of publication of application:
**18.09.2019 Bulletin 2019/38**

(73) Proprietors:
- **Kuraray Co., Ltd.**
  **Okayama 710-0801 (JP)**
- **Tsuchiya Co., Ltd.**
  **Nagoya-shi, Aichi 460-0013 (JP)**

(72) Inventors:
- **NONAKA, Yoshimi**
  **Kurashiki-shi**
  **Okayama 713-8550 (JP)**
- **WASHITAKE, Yosuke**
  **Kurashiki-shi**
  **Okayama 713-8550 (JP)**
- **ENDO, Ryokei**
  **Tokyo 100-8115 (JP)**
- **FUJIWARA, Takeshi**
  **Nagoya-shi**
  **Aichi 460-0013 (JP)**
- **TOMITA, Ryusuke**
  **Nagoya-shi**
  **Aichi 460-0013 (JP)**

(74) Representative: **Müller-Boré & Partner Patentanwälte PartG mbB**
**Friedenheimer Brücke 21**
**80639 München (DE)**

(56) References cited:
**EP-A1- 2 881 421**
**WO-A1-2008/018193**
**WO-A1-2009/081760**
**WO-A1-2009/084411**
**WO-A1-2013/129540**
**WO-A1-2016/100836**
**WO-A1-2016/126959**
**JP-A- H0 911 374**
**JP-A- S63 120 152**
**JP-A- 2008 291 393**
**JP-A- 2008 525 664**
**JP-A- 2009 184 296**
**JP-A- 2014 503 694**
**JP-B2- 5 208 434**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 540 109 B1

## Description

### TECHNICAL FIELD

The present invention relates to a sound-absorbing thermal-insulating material which contains polyetherimide fibers.

### BACKGROUND ART

A sound-absorbing thermal-insulating material used in applications of automobiles, aircrafts, and the like is required of lightweight properties and flameproofness (flame resistance), and conventionally, a sound-absorbing thermal-insulating material formed of glass wool or rock wool is used.

Although this sound-absorbing thermal-insulating material is lightweight and has favorable sound-absorbing thermal-insulating performance, flameproofness thereof is insufficient, and in an application of aircrafts or the like, in which high flameproofness is required, it is needed to combine this sound-absorbing thermal-insulating material with a flame retardant and a flame retardant sheet for use.

In addition, because shape recovery properties (restorability) in a case in which this sound-absorbing thermal-insulating material is compressed and deformed upon construction are poor, permanent set in fatigue and the like are easily caused, and consequently, this sound-absorbing thermal-insulating material has problems of deterioration in properties and difficulty to handle.

Therefore, in order to solve the above-described problems, there has been proposed a sound-absorbing thermal-insulating material which contains flame resistant organic fibers and inorganic fibers. More specifically, there is disclosed a sound-absorbing thermal-insulating material which is obtained by evenly mixing highly heat resistant inorganic fibers retaining a high temperature strength at 1,000 °C or higher (for example, glass fibers) and flame resistant organic fibers having a heat fusion temperature or a pyrolysis temperature of 350 °C or higher (for example, polyetherimide fibers) and subjecting the resultant cottony material to heat treatment to thereby form the whole into a mat (for example, refer to WO 2008/018193 ). JP 5 208434 B2 also reveals a heat insulating and sound absorbing material for aircraft which is flexible, relatively inexpensive heat insulating and sound absorbing material having high heat insulating and sound absorbing properties, and adapted to new particularly severe required specifications of the aircraft.

### SUMMARY OF THE INVENTION

### TECHNICAL PROBLEM

However, since the above-mentioned sound-absorbing thermal-insulating material disclosed in PATENT DOCUMENT 1 is formed into the mat by bonding the inorganic fibers of 20% to 80% by mass to the organic fibers of 10% to 25% by mass having a low melting point, flexibility thereof is not sufficient, and a shape thereof in a case in which the sound-absorbing thermal-insulating material is compressed and deformed is less likely to be 2 restored, thereby leading to a problem in that influence is exerted on sound-absorbing properties, heat-insulating properties, and the like.

Therefore, in view of the above-described problems, the present invention has been devised, and an object of the present invention is to provide a sound-absorbing thermal-insulating material which is capable of concurrently satisfying sound-absorbing properties, heat-insulating properties, lightweight properties, and flameproofness and is excellent in restorability.

### SOLUTION TO THE PROBLEM

In order to achieve the above-mentioned object, a sound-absorbing thermal-insulating material according to claim 1 of the present invention includes flame resistant organic fibers and inorganic fibers bonded to the flame resistant organic fibers, wherein the flame resistant organic fibers shrink and the inorganic fibers are distorted, so that the flame resistant organic fibers and the inorganic fibers are entangled with one another and distend.

### ADVANTAGES OF THE INVENTION

According to the present invention, a sound-absorbing thermal-insulating material which is capable of concurrently satisfying sound-absorbing properties, heat-insulating properties, lightweight properties, and flameproofness and is excellent in restorability can be provided.

BRIEF DESCRIPTION OF THE DRAWINGS

[FIG. 1] FIG. 1 is a schematic view illustrating a sound-absorbing thermal-insulating material according to an embodiment of the present invention.

[FIG. 2] FIG. 2 is a schematic view illustrating a mixed-fiber nonwoven fabric, in a preliminary stage, of the sound-absorbing thermal-insulating material according to the embodiment of the present invention.

[FIG. 3] FIG. 3 is a diagram illustrating a modified example of the sound-absorbing thermal-insulating material according to the embodiment of the present invention.

[FIG. 4] FIG. 4 is a scanning electron micrograph (SEM) of a sound-absorbing thermal-insulating material prepared in Example 1.

[FIG. 5] FIG. 5 is a scanning electron micrograph (SEM) of a sound-absorbing thermal-insulating material prepared in Comparative Example 1.

[FIG. 6] FIG. 6 is a scanning electron micrograph (SEM) of a sound-absorbing thermal-insulating material prepared in Comparative Example 2.

[FIG. 7] FIG. 7 is a scanning electron micrograph (SEM) of a sound-absorbing thermal-insulating material prepared in Comparative Example 3.

DESCRIPTION OF EMBODIMENT

Hereinafter, an embodiment of the present invention will be described in detail, with reference to the accompanying drawings. As shown in FIG. 1, a sound-absorbing thermal-insulating material 1 of the present invention includes flame resistant organic fibers 2 and inorganic fibers 4 bonded to the flame resistant organic fibers 2 via a binder 3.

<Flame Resistant Organic Fibers>

As the flame resistant organic fibers 2 in the present invention, for example, polyetherimide fibers, polyetheretherketone fibers, polyether ketone ketone fibers, polyether ketone fibers, polyamidimide fibers, meta-aramid fibers, para-aramid fibers, polybenzoxazole fibers, polybenzimidazole fibers, polybenzothiazole fibers, polyarylate fibers, polyethersulfone fibers, liquid crystalline polyester fibers, polyphenylene sulfide fibers, or the like are cited. Note that these kinds of flame resistant organic fibers 2 may be used alone, or in combination of two kinds or more.

It is preferable that a content of the flame resistant organic fibers 2 to the whole of the sound-absorbing thermal-insulating material 1 is 30% to 70% by mass, it is more preferable that the content thereof thereto is 30% to 60% by mass, and it is particularly preferable that the content thereof thereto is 40% to 50% by mass. This is because if the content of the flame resistant organic fibers 2 is larger than 70% by mass, the sound-absorbing thermal-insulating material 1 largely thermally shrinks and a bulk density is increased (that is, a void ratio is decreased) and because a bulky structure may become insufficient. In addition, this is because if the content of the flame resistant organic fibers 2 is less than 30% by mass, upon subjecting a nonwoven fabric formed of the flame resistant organic fibers 2 and inorganic fibers 4 to heat treatment, an amount of the flame resistant organic fibers 2 thermally shrinking decreases and an amount of the inorganic fibers 4 also decreases which is thereby distorted, and as a result, the bulky structure may become insufficient.

In other words, the content of the flame resistant organic fibers 2 is set to 30% to 70% by mass, thereby allowing a high void ratio (low bulk density) of the sound-absorbing thermal-insulating material 1 to be achieved.

In addition, in view of ensuring excellent flame resistance, it is preferable that in the flame resistant organic fibers 2, a value of an LOI (Limited Oxygen Index) measured in conformity with a JIS L1091 test method is larger than 30.

In addition, in view of obtaining a uniform constitution, it is preferable that an average fiber diameter of the flame resistant organic fibers 2 is 5 $\mu$m to 40 $\mu$m, and it is more preferable that the average fiber diameter thereof is 10 $\mu$m to 30 $\mu$m, and it is further preferable that the average fiber diameter thereof is 10 $\mu$m to 20 $\mu$m.

In addition, in view of effectively imparting distortion to the inorganic fibers 4, it is preferable that an average fiber length of the flame resistant organic fibers 2 is 5 mm to 25 mm, and it is more preferable that the average fiber length thereof is 10 mm to 20 mm, and it is further preferable that the average fiber length thereof is 12 mm to 18 mm.

In addition, in view of enhancing handleability and uniformity, it is preferable that a fineness of the flame resistant organic fibers 2 is 0.5 dtex to 20 dtex, and it is more preferable that the fineness thereof is 1.5 dtex to 15 dtex, and it is further preferable that the fineness thereof is 2 dtex to 10 dtex.

In addition, in view of attaining high thermal shrink properties and excellent heat resistance, flame resistance, and fuming properties, it is preferable that as the flame resistant organic fibers 2, a polyetherimide resin is used. These polyetherimide fibers are constituted of a polyetherimide-based polymer which contains an aliphatic-based, alicyclic-based, or aromatic-based ether unit and cyclic imide as a recurring unit. This polyetherimide-based polymer is not particularly limited as long as the polyetherimide-based polymer has amorphousness and melting moldability.

In addition, as a main chain of the polyetherimide-based polymer, a structural unit other than the cyclic imide and an ether linkage, for example, an aliphatic-based, alicyclic-based, or aromatic-based ester unit, an oxycarbonyl unit, or the like may be contained, as long as an amount thereof is in a range in which effects of the present invention are not inhibited.

More specifically, for example, a polyetherimide-based polymer obtained by a polycondensate of 2,2-bis[4-(2, 3-dicarboxyphenoxy)phenyl]propane dianhydride and m-phenylenediamine, which mainly has a structural unit expressed by the below general formula (1), can be used. This polyetherimide-based polymer can be obtained by forming, into fibers, an amorphous polyetherimide-based polymer, which is commercially available as "ULTEM™" manufactured by SABIC Innovative Plastics.

[Formula 1]

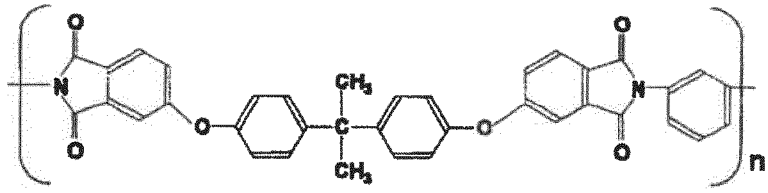

Although a molecular weight of the polyetherimide-based polymer is not particularly limited, in view of mechanical properties and dimensional stability of the obtained fibers and process passing properties, it is preferable that a weight-average molecular weight (Mw) is 1,000 to 80,000.

In addition, although it is preferable that a polyetherimide-based polymer having a high molecular weight is used since such a polyetherimide-based polymer is excellent in a fiber strength, heat resistance, and the like, in view of reducing manufacturing costs and fiber formation costs, it is preferable that a range of Mw is 2,000 to 50,000 and it is more preferable that the range thereof is 3,000 to 40,000.

<Inorganic Fibers>

As the inorganic fibers 4 in the present invention, for example, glass fibers, basalt fibers, ceramic fibers, carbon fibers, or the like, which have flame resistance, are cited. Note that these kinds of inorganic fibers 4 may be used alone or in combination of two kinds or more.

Among these, in view of owing high elasticity and excellence in handleability, it is preferable that the glass fibers are used.

It is preferable that a content of the inorganic fibers 4 to the whole of the sound-absorbing thermal-insulating material 1 is 20% to 70% by mass, it is more preferable that the content of the inorganic fibers 4 with respect to the whole sound-absorbing thermal-insulating material 1 is 40% to 70% by mass, and it is particularly preferable that the content of the inorganic fibers 4 with respect to the whole sound-absorbing thermal-insulating material 1 is 50% to 60% by mass. This is because if the content of the inorganic fibers 4 is larger than 70% by mass, as compared with the flame resistant organic fibers 2, a ratio of the inorganic fibers 4 having a large density is increased. Hence, a weight of the sound-absorbing thermal-insulating material 1 may be thereby increased. In addition, this is because if the content of the inorganic fibers 4 is less than 20% by mass, a mass ratio of the flame resistant organic fibers 2 is increased. Hence, the sound-absorbing thermal-insulating material 1 largely and thermally shrinks and a bulk density is increased (that is, a void ratio is decreased) and as a result, a bulky structure may become insufficient.

In other words, the content of the inorganic fibers 4 is set to 20% to 70% by mass, thereby allowing a high void ratio (low bulk density) of the sound-absorbing thermal-insulating material 1 to be achieved and lightweightness of the sound-absorbing thermal-insulating material 1 to be attained.

In addition, an average fiber diameter of the inorganic fibers 4 is 4 μm to 30 μm, and it is more preferable that the average fiber diameter thereof is 5 μm to 20 μm. This is because if the average fiber diameter of the inorganic fibers 4 is less than 4 μm, the inorganic fibers 4 are thin. Upon subjecting the nonwoven fabric formed of the flame resistant organic fibers 2 and the inorganic fibers 4 to the heat treatment, the inorganic fibers 4 are excessively distorted and collapsed due to a shrinkage force of the flame resistant organic fibers 2, and the sound-absorbing thermal-insulating material 1 is not provided with sufficient bulkiness, and could suffer a decrease in restorability. In addition, in particular, inorganic fibers 4 having an average fiber diameter of less than 3 μm may cause itching or the like on skin due to dispersal upon handling, and further, there is the concern about the influence exerted on human bodies.

In other words, the average fiber diameter of the inorganic fibers 4 is set to 4 μm to 30 μm, since an elastic force of the inorganic fibers 4 can be enhanced, the restorability of the sound-absorbing thermal-insulating material 1 is enhanced, handleability is thereby enhanced and safety of the sound-absorbing thermal-insulating material 1 can be enhanced.

<Binder>

The sound-absorbing thermal-insulating material 1 of the present invention contains the binder 3 for bonding the flame resistant organic fibers 2 and the inorganic fibers 4 to one another. Although this binder 3 is not particularly limited, organic fibers having a low melting point can be used. Examples of such organic fibers are composed of polyolefin such as polypropylene and polyethylene, polyvinyl alcohol, polyvinyl acetate, ethylene-vinylacetate, polyacrylic acid ester, polyethylene terephthalate, or modified polyethylene terephthalate, and copolymers of these substances. Note that a liquid binder, that is, a binder component solution or emulsion liquid may be used.

In addition, it is preferable that a content of the binder 3 to the whole of the sound-absorbing thermal-insulating material 1 is 1% to 10% by mass, it is more preferable that the content thereof thereto is 2% to 8% by mass, and it is particularly preferable that the content thereof thereto is 3% to 6% by mass. This is because if the content of the binder 3 is larger than 10% by mass, contents of the flame resistant organic fibers 2 and the inorganic fibers 4 are reduced. Hence, the flameproofness of the sound-absorbing thermal-insulating material 1 may be reduced and the restorability thereof may be impaired. If the content of the binder 3 is less than 1% by mass, bonding properties of the flame resistant organic fibers 2 and the inorganic fibers 4 might not sufficiently be enhanced.

In other words, the content of the binder 3 is set to 1% to 10% by mass, thereby allowing the flameproofness and the restorability of the sound-absorbing thermal-insulating material 1 to be achieved without reducing the bonding properties of the flame resistant organic fibers 2 and the inorganic fibers 4.

<Sound-absorbing thermal-insulating Material>

Since the sound-absorbing thermal-insulating material 1 of the present invention is excellent in sound-absorbing properties and heat-insulating properties and is capable of achieving both of lightweight properties and flameproofness, in particular, the sound-absorbing thermal-insulating material 1 can be used in applications of aircrafts, automobiles, railroads, boats and ships, and the like. Further, since the sound-absorbing thermal-insulating material 1 of the present invention is excellent in restorability, handleability thereof is excellent, and it does not occur that performance thereof is impaired by permanent set in fatigue.

In addition, as shown in FIG. 1, in the sound-absorbing thermal-insulating material 1 of the present invention, the flame resistant organic fibers 2 shrink and the inorganic fibers 4 are distorted due to the shrinkage of the flame resistant organic fibers 2, and the flame resistant organic fibers 2 and the inorganic fibers 4 are thereby entangled with one another and form voids 5, and the sound-absorbing thermal-insulating material 1 has a three-dimensional structure which distends in a thickness direction T.

This three-dimensional structure is formed by the entanglement of the flame resistant organic fibers 2 and the inorganic fibers 4 in a thread-connected manner. In the three-dimensional structure, an average fiber diameter of the flame resistant organic fibers 2 is larger than an average fiber diameter of the inorganic fibers 4, and bonded portions of the flame resistant organic fibers 2 and the inorganic fibers 4 (that is, portions of the binder 3 in FIG. 1) are evenly distributed in the thickness direction T.

Since owing to the above-described three-dimensional structure, the sound-absorbing thermal-insulating material 1 has a high void ratio (that is, a low bulk density), heat is less likely to be conducted due to air layers which are present in the voids 5 formed between the flame resistant organic fibers 2 and inorganic fibers 4, thereby decreasing a thermal conductivity. As a result, the sound-absorbing thermal-insulating material 1 has high heat-insulating properties.

In addition, since the void ratio of the sound-absorbing thermal-insulating material 1 is high, the sound-absorbing thermal-insulating material 1 is excellent in lightweight properties.

In addition, since the sound-absorbing thermal-insulating material 1 is constituted of the fibers and has a multitude of the voids, upon entering of sound, air which is present in the voids vibrates and is converted to heat and thus, the sound-absorbing thermal-insulating material 1 has favorable sound-absorbing properties. Further, since the sound-absorbing thermal-insulating material 1 is formed of the fibers which are entangled with one another in the thread-connected manner, a path of the entering sound becomes long, and therefore, it is estimated that high attenuation effect can be obtained.

In addition, the flame resistant organic fibers 2 and the inorganic fibers 4 have flame resistance; flameproofness of the sound-absorbing thermal-insulating material 1 can be enhanced. Further, since the sound-absorbing thermal-insulating material 1 of the present invention is excellent in restorability, and it does not occur that performance thereof is impaired due to deformation and compression upon handling.

In addition, in view of enhancing the heat-insulating properties, the lightweight properties, and the sound-absorbing properties of the sound-absorbing thermal-insulating material 1, it is preferable that a void ratio of the sound-absorbing thermal-insulating material 1 is 99% or more. A bulk density of the sound-absorbing thermal-insulating material 1 is 0.02 g/cm$^3$ or less.

Note that the "void ratio" herein refers to a value calculated by below Equation (1).

[Math. 1]

$$\text{A void ratio [\%]} = \{1 - \text{a total volume of fibers constituting a sound-absorbing thermal-insulating material [cm}^3\text{]/a volume of a sound-absorbing thermal-insulating material [cm}^3\text{]}\} \times 100 \qquad (1)$$

In addition, the "bulk density" herein refers to a value calculated by below Equation (2).

[Math. 2]

$$\text{A bulk density [g/cm}^3\text{]} = \text{a weight of a sound-absorbing thermal-insulating material 1 [g]/a volume of a sound-absorbing thermal-insulating material 1 [cm}^3\text{]} \qquad (2)$$

In addition, a thickness of the sound-absorbing thermal-insulating material 1 is not particularly limited and can be appropriately selected depending on a place where the sound-absorbing thermal-insulating material 1 is used and on demanded performance. However, in view of the handleability, it is preferable that the thickness thereof is 10 mm to 150 mm.

In addition, a basis weight of the sound-absorbing thermal-insulating material 1 is not particularly limited and can be appropriately selected depending on a place where the sound-absorbing thermal-insulating material 1 is used and on demanded performance. However, in view of the handleability, it is preferable that the basis weight thereof is 60 g/m$^2$ to 900 g/m$^2$.

Described next is a method for manufacturing the sound-absorbing thermal-insulating material of the present invention.

First, the flame resistant organic fibers 2 such as the polyetherimide fibers, the inorganic fibers 4 such as the glass fibers, and the binder 3 such as polyethylene-terephthalate fibers are evenly mixed at a predetermined mass ratio, and by employing a wet paper-making method, a mixed-fiber nonwoven fabric 10 shown in FIG. 2 in which the flame resistant organic fibers 2 and the inorganic fibers 4 are bonded to one another by the binder 3 is formed.

Thereafter, this mixed-fiber nonwoven fabric 10 is subjected to the heat treatment at a predetermined temperature for a predetermined period of time, thereby manufacturing the sound-absorbing thermal-insulating material 1 shown in FIG. 1.

At this time, in the present invention, the mixed-fiber nonwoven fabric 10 is heated at a glass transition temperature or more of the flame resistant organic fibers 2. For example, when the polyetherimide fibers are used as the flame resistant organic fibers 2, the mixed-fiber nonwoven fabric 10 is heated at a glass transition temperature (215°C) or more of the polyetherimide fibers (for example, 240°C).

Accordingly, the flame resistant organic fibers 2 thermally shrink and the inorganic fibers 4 which are bonded to the flame resistant organic fibers 2 are distorted due to the shrinkage of the flame resistant organic fibers 2, and as shown in FIG. 1, the flame resistant organic fibers 2 and the inorganic fibers 4 are thereby entangled with one another and form voids 5, and the sound-absorbing thermal-insulating material 1 having the three-dimensional structure which distends in the thickness direction T is formed.

In addition, for example, when the polyetheretherketone fibers are used, the heating is conducted in a range of 170°C to 200°C, or when the polyamidimide fibers are used, the heating is conducted in a range of 270°C to 320°C, thereby forming the sound-absorbing thermal-insulating material 1 having the above-described three-dimensional structure.

Note that when the polyetherimide fibers used as the flame resistant organic fibers 2 are manufactured, the heretofore known melt spinning apparatus can be used. In other words, polyetherimide-based polymer pellets are melt-kneaded by a melt-extruder, a molten polymer is guided to a spinning chimney, an amount thereof is measured by a gear pump, and yarn discharged from a spinning nozzle is wound up, thereby obtaining the polyetherimide fibers.

Although a winding speed is not particularly limited, it is preferable that the yarn is wound up in a range of 500 m/min. to 4000 m/min. As the winding speed, a speed of less than 500 m/min. is not preferable in view of productivity

whereas a high speed exceeding 4000 m/min. is not preferable since disconnection of the fibers is easily caused.

Note that a cross-sectional shape of each of the polyetherimide fibers is also not particularly limited, and the cross-sectional shape may be a circular, hollow, flattened, or atypical cross-sectional shape such as a star shape.

Note that the embodiment may be modified as described below.

As shown in FIG. 3, a configuration may be adopted in which on one side of the sound-absorbing thermal-insulating material 1, a melt-blown nonwoven fabric 20 having a thickness of 0.05 mm to 0.4 mm and a basis weight of 4 to 80 g/m$^2$ is provided. Although a material of the melt-blown nonwoven fabric is not particularly limited, in view of preventing the flame resistance of the sound-absorbing thermal-insulating material from being reduced, it is preferable that a flame resistant material is used.

By employing the configuration as described above, sound which has entered the sound-absorbing thermal-insulating material 1 is internally reflected again by the melt-blown nonwoven fabric 20, and owing to repetitive attenuation effect, it is made possible to further enhance the sound-absorbing properties of the sound-absorbing thermal-insulating material 1.

Note that a configuration may be adopted in which on both sides of the sound-absorbing thermal-insulating material 1, melt-blown nonwoven fabrics 20 are provided.

[Examples]

Hereinafter, the present invention will be described based on Examples. Note that the present invention shall not be limited to these Examples. These Examples may be modified and changed based on the intent of the present invention. Such a change and modification shall not be excluded from the scope of the invention.

(Example 1)

<Preparation of Sound-absorbing thermal-insulating Material>

Polyetherimide fibers (a cut length: 15 mm, a fineness: 2.2 dtex), glass fibers (a fiber diameter: 9 μm, a cut length: 18 mm), and a polyethylene-terephthalate-based binder whose softening point was 110°C were evenly mixed at a mass ratio of 48: 48: 4, and by employing a wet paper-making method, a mixed-fiber nonwoven fabric in which the polyetherimide fibers and the glass fibers were bonded to one another was produced.

Next, this mixed-fiber nonwoven fabric was heated at a temperature of 240°C for 5 minutes, thereby preparing a sound-absorbing thermal-insulating material having a void ratio of 99.4%, a bulk density of 0.011 g/cm$^3$, a basis weight of 280 g/m$^2$, and a thickness of 25 mm.

<Bulky Structure Evaluation>

Next, the prepared sound-absorbing thermal-insulating material was observed by a scanning electron microscope (SEM), and it was evaluated whether or not the sound-absorbing thermal-insulating material had a three-dimensional structure (bulky structure) which distended in a thickness direction. A scanning electron micrograph (SEM) (cross-sectional view) of the sound-absorbing thermal-insulating material is shown in FIG. 4.

As shown in FIG. 4, it is seen that in the prepared sound-absorbing thermal-insulating material, the polyetherimide fibers 12 thermally shrank, the glass fibers 14 bonded to the polyetherimide fibers 12 were distorted, the polyetherimide fibers and the glass fibers were entangled with one another and distended (that is, the sound-absorbing thermal-insulating material had the bulky structure).

<Sound-Absorbing Coefficient Evaluation>

First, perpendicular incident sound-absorbing coefficients of the prepared sound-absorbing thermal-insulating material were measured in conformity with a JISA-1405 method by using a sound-absorbing coefficient measurement system using an acoustic impedance tube (a large-sized measurement tube of a two-microphone impedance tube 4206 type, manufactured by Brüel & Kjær).Next, an average value of the obtained sound-absorbing coefficients in a range of frequencies of 1,000 Hz to 6,300 Hz was calculated as an average sound-absorbing coefficient [%].Table 1 shows the result.

<Thermal Conductivity Evaluation>

By using a heat flow meter method measurement apparatus (manufactured by NETZSCH, a trade name: HFM436), based on a heat flow meter method (HFM method), a thermal conductivity [W / (m·K)] of the prepared sound-absorbing thermal-insulating material was measured. Note that a measurement temperature was 23°C (a high measurement temperature: 33°C, a low measurement temperature: 13°C, a temperature difference: 20°C). Table 1 shows the result.

<Thermal Resistance Value Evaluation>

From the above-mentioned thermal conductivity measurement result and a thickness, a thermal resistance value was calculated by below equation.
[Math. 3]

$$\text{A thermal resistance value } [(m^2 \cdot K)/W] = \text{a thickness } [m]/\text{a thermal conductivity } [W/m \cdot K)] \qquad (3)$$

<Flameproofness Evaluation>

A sheet-shaped sample (with a length of 15 cm and a width of 15 cm) was prepared from the prepared sound-absorbing thermal-insulating material, and a face of this sample was horizontally set.

Next, below the sample, a burner was held so as to keep an angle of 20 degrees with respect the sample, and contacting with a flame was conducted such that a distance between a tip end of an inner blue flame released from the burner and a central portion of the sample was 0 to 3 mm.

The contacting with the flame was conducted for 4 minutes, and thereafter, it was visually determined whether or not a hole was made in the sample, and in accordance with the below criteria, the flameproofness was evaluated Table 1 shows the results.

○: No hole was made in the sample.
X: The hole was made in the sample.

<Restorability Evaluation>

A sheet-shaped sample (with a length of 26 cm and a width of 10 cm) was prepared from the prepared sound-absorbing thermal-insulating material. Next, a cycle in which a load of 30 kg was exerted on this sample for 24 hours and thereafter, the load was released for 24 hours was defined as 1 cycle, and after conducting 5 cycles, a thickness [mm] was measured. A percentage of restorability from an initial thickness was calculated by using blow equation (4). Table 1 shows the result.
[Math. 4]

$$\text{A percentage of restorability } [\%] = \text{a thickness after 5 cycles } [mm]/\text{an initial thickness } [mm] \times 100. \qquad (4)$$

(Example 2)

Except that a thickness of the sound-absorbing thermal-insulating material was changed to 15 mm, a sound-absorbing thermal-insulating material was prepared as in Example 1. Note that a void ratio of the prepared sound-absorbing thermal-insulating material was 99.5%, a bulk density thereof was 0.010 g/cm$^3$, and a basis weight thereof was 156 g/m$^2$. Thereafter, as in Example 1, bulky structure evaluation, sound-absorbing coefficient evaluation, thermal conductivity evaluation, flameproofness evaluation, and restorability evaluation were conducted. Table 1 shows the results.

Based on a scanning electron micrograph (SEM) (not shown) of the sound-absorbing thermal-insulating material, as in Example 1, it was confirmed that the sound-absorbing thermal-insulating material had a bulky structure.

(Example 3)

On one side of the sound-absorbing thermal-insulating material prepared in Example 2, a melt-blown nonwoven fabric (having a thickness of 0.24 mm and a basis weight of 50.2 g/m$^2$) obtained by using amorphous polyetherimide

whose melt viscosity at 330°C was 500 Pa·s and spinning the amorphous polyetherimide at a spinning temperature of 390°C by a melt-blown apparatus was laminated. Thereafter, as in Example 1, bulky structure evaluation, sound-absorbing coefficient evaluation, thermal conductivity evaluation, flameproofness evaluation, and restorability evaluation were conducted. Table 1 shows the results.

Note that based on a scanning electron micrograph (SEM) (not shown) of the sound-absorbing thermal-insulating material, as in Example 1, it was confirmed that the sound-absorbing thermal-insulating material had a bulky structure.

(Example 4)

Instead of the polyetherimide fibers, polyetheretherketone fibers (a cut length: 15 mm, a fineness: 2.2 dtex, a glass transition temperature: 143°C) was used, a mixed-fiber nonwoven fabric in which the polyetherimide fibers and glass fibers were bonded to one another by a binder was heated at a temperature of 180°C for 5 minutes, thereby preparing a sound-absorbing thermal-insulating material having a void ratio of 99.4%, a bulk density of 0.011 g/cm$^3$, a basis weight of 154 g/m$^2$, and a thickness of 14 mm.

Thereafter, as in Example 1, bulky structure evaluation, sound-absorbing coefficient evaluation, thermal conductivity evaluation, flameproofness evaluation, and restorability evaluation were conducted Table 1 shows the results.

Note that based on a scanning electron micrograph (SEM) (not shown) of the sound-absorbing thermal-insulating material, as in Example 1, it was confirmed that the sound-absorbing thermal-insulating material had a bulky structure.

(Comparative Example 1)

As in Example 1 except that a mass ratio of polyetherimide fibers, glass fibers, and polyethylene-terephthalate-based binder was changed to 76 : 20 : 4, a sound-absorbing thermal-insulating material having a void ratio of 95.9%, a bulk density of 0.063 g/cm$^3$, a basis weight of 499 g/m$^2$, and a thickness of 8 mm was prepared. Thereafter, as in Example 1, bulky structure evaluation, sound-absorbing coefficient evaluation, thermal conductivity evaluation, flameproofness evaluation, and restorability evaluation were conducted. Table 1 shows the results. In addition, a scanning electron micrograph (SEM) (cross-sectional view) of the sound-absorbing thermal-insulating material is shown in FIG. 5.

(Comparative Example 2)

As in Example 1 except that a mass ratio of polyetherimide fibers, glass fibers, and polyethylene-terephthalate-based binder was changed to 20 : 76 : 4, a sound-absorbing thermal-insulating material having a void ratio of 98.1%, a bulk density of 0.042 g/cm$^3$, a basis weight of 125 g/m$^2$, and a thickness of 5 mm was prepared.

Thereafter, as in Example 1, bulky structure evaluation, sound-absorbing coefficient evaluation, thermal conductivity evaluation, flameproofness evaluation, and restorability evaluation were conducted Table 1 shows the results. In addition, a scanning electron micrograph (SEM) (cross-sectional view) of the sound-absorbing thermal-insulating material is shown in FIG. 6.

(Comparative Example 3)

Polyetherimide fibers (a cut length: 15 mm, a fineness: 2.2 dtex) and glass fibers (a fiber diameter: 9 μm, a cut length: 18 mm) were evenly mixed at a mass ratio of 50: 50, and by employing a needle-punching method, a mixed-fiber nonwoven fabric constituted of the polyetherimide fibers and the glass fibers was produced.

Next, this mixed-fiber nonwoven fabric was heated at a temperature of 240°C for 5 minutes, thereby preparing a sound-absorbing thermal-insulating material having a void ratio of 68.0%, a bulk density of 0.610 g/cm$^3$, a basis weight of 160 g/m$^2$, and a thickness of 3 mm.

Thereafter, as in Example 1, bulky structure evaluation, sound-absorbing coefficient evaluation, thermal conductivity evaluation, flameproofness evaluation, and restorability evaluation were conducted Table 1 shows the results. In addition, a scanning electron micrograph (SEM) (cross-sectional view) of the sound-absorbing thermal-insulating material is shown in FIG. 7.

[Table 1]

| | Mass Ratio (flame resistant organic fibers : inorganic fibers : binder) | Heat Treatment Temperature [°C] | Void Ratio [%] | Bulk Density [g/cm$^3$] | Basis Weight [g/cm$^2$] | Thickness [mm] | Bulky Structure | Average Sound-Absorbing Coefficient [%] | Thermal Conductivity [W/m·K)] | Thermal Resistance Ratio [m$^2$K)/W] | Flameproofness | Restorability Percentage [%] |
|---|---|---|---|---|---|---|---|---|---|---|---|---|
| Example 1 | 48:48:4 | 230 | 99.4 | 0.011 | 280 | 25 | ○ | 58 | 0.043 | 0.581 | ○ | 77.9 |
| Example 2 | 48:48:4 | 230 | 99.5 | 0.010 | 156 | 15 | ○ | 26 | 0.043 | 0.349 | ○ | 78.8 |
| Example 3 | 48:48:4 | 230 | 99.5 | 0.010 | 156 | 15 | ○ | 82 | 0.042 | 0.357 | ○ | 78.5 |
| Example 4 | 48:48:4 | 180 | 99.4 | 0.011 | 154 | 14 | ○ | 27 | 0.043 | 0.326 | ○ | 78.9 |
| Comparative Example 1 | 76:20:4 | 230 | 95.9 | 0.063 | 499 | 8 | x | 18 | 0.044 | 0.182 | x | 34.5 |
| Comparative Example 2 | 20:76:4 | 230 | 98.1 | 0.042 | 125 | 5 | x | 15 | 0.049 | 0.102 | ○ | 45.1 |
| Comparative Example 3 | 50:50:0 | 230 | 68.0 | 0.610 | 160 | 3 | x | 12 | 0.042 | 0.071 | ○ | 60.2 |

As shown in Table 1, it is seen that in each of the sound-absorbing thermal-insulating materials in Examples 1 to 4, the polyetherimide fibers and the glass fibers were entangled with one another and distended and each of the sound-absorbing thermal-insulating materials in Examples 1 to 4 had the bulky structure. However, it is seen that in Comparative Example 1, since the mass ratio of the polyetherimide fibers was large, the sound-absorbing thermal-insulating material largely thermally shrank, the bulk density increased (that is, the void ratio decreased), and as shown in FIG. 5, formation of the bulky structure was not enabled.

In addition, it is seen that in Comparative Example 2, since the mass ratio of the polyetherimide fibers was small, the glass fibers were not able to be sufficiently distorted due to the shrinkage of the polyetherimide fibers, and as shown in FIG. 6, the bulky structure was not able to be formed.

In addition, in Comparative Example 3, since no binder was contained, the sound-absorbing thermal-insulating material did not have a structure in which the polyetherimide fibers and the glass fibers were bonded to one another Accordingly, it is seen that the glass fibers caused by the shrinkage of the polyetherimide fibers were not able to be distorted, and as shown in FIG. 7, the bulky structure was not able to be formed.

In addition, as shown in Table 1, it is seen that since each of the sound-absorbing thermal-insulating materials in Examples 1 to 4 was excellent in the flameproofness and had the bulky structure, as compared with the sound-absorbing thermal-insulating materials each having no bulky structure in Comparative Examples 1 to 3, each of the sound-absorbing thermal-insulating materials in Examples 1 to 4 had the high average sound-absorbing coefficient and thermal resistance value and was excellent in the sound-absorbing properties and the heat-insulating properties.

In particular, it is seen that in Example 3 in which on the one side of the sound-absorbing thermal-insulating material, the melt-blown nonwoven fabric 20 was laminated, the sound-absorbing properties was remarkably enhanced.

In addition, as shown in Table 1, it is seen that since each of the sound-absorbing thermal-insulating materials in Examples 1 to 4 having the bulky structure had the large void ratio and the small bulk density, as compared with the sound-absorbing thermal-insulating materials each having no bulky structure in Comparative Examples 1 to 3, each of the sound-absorbing thermal-insulating materials in Examples 1 to 4 was excellent in the lightweight properties.

In addition, as shown in Table 1, it is seen that since in each of the sound-absorbing thermal-insulating materials in Examples 1 to 4, the inorganic fibers were fixed in a distorted state, as compared with the sound-absorbing thermal-insulating materials each having no bulky structure in Comparative Examples 1 to 3, each of the sound-absorbing thermal-insulating materials in Examples 1 to 4 was excellent in the restorability and the handleability.

## INDUSTRIAL APPLICABILITY

As described hereinbefore, the present invention is suitable for a sound-absorbing thermal-insulating material which contains polyetherimide fibers.

## DESCRIPTION OF REFERENCE CHARACTERS

| | |
|---|---|
| 1 | Sound-absorbing thermal-insulating material |
| 2 | Flame resistant organic fibers |
| 3 | Binder |
| 4 | Inorganic fibers |
| 5 | Voids |
| 10 | Mixed-fiber nonwoven fabric |
| 20 | Melt-blown nonwoven fabric |
| T | Thickness direction of sound-absorbing thermal-insulating material |

## Claims

1. A sound-absorbing thermal-insulating material comprising: flame resistant organic fibers; inorganic fibers bonded to the flame resistant organic fibers; and a binder for bonding the flame resistant organic fibers and the inorganic fibers to one another, wherein the flame resistant organic fibers shrink and the inorganic fibers are distorted so that the flame resistant organic fibers and the inorganic fibers are entangled with one another and distend,
wherein a content of the flame resistant organic fibers to a whole of the sound-absorbing thermal-insulating material is 30% to 70% by mass,
wherein an average fiber diameter of the inorganic fibers is 4 $\mu$m to 30 $\mu$m, wherein a bulk density is 0.02 g/cm$^3$ or less, and

wherein an average fiber diameter of the flame resistant organic fibers is larger than the average fiber diameter of the inorganic fibers.

2. The sound-absorbing thermal-insulating material of claim 1, wherein a content of the inorganic fibers to the whole of the sound-absorbing thermal-insulating material is 20% to 70% by mass.

3. The sound-absorbing thermal-insulating material of claim 1 or 2, wherein a void ratio is 99% or more.

4. The sound-absorbing thermal-insulating material of any one of claims 1 to 3, wherein the flame resistant organic fibers are polyetherimide fibers and the inorganic fibers are glass fibers.

5. The sound-absorbing thermal-insulating material of any one of claims 1 to 4, wherein on at least one side of the sound-absorbing thermal-insulating material, a melt-blown nonwoven fabric having a thickness of 0.05 mm to 0.4 mm and a basis weight of 4 g/m$^2$ to 80 g/m$^2$ is provided.

## Patentansprüche

1. Schallabsorbierendes, wärmeisolierendes Material, umfassend:

flammbeständige organische Fasern;
anorganische Fasern, die mit den flammbeständigen organischen Fasern verbunden sind; und
ein Bindemittel, um die flammbeständigen organischen Fasern und die anorganischen Fasern miteinander zu verbinden, wobei die flammbeständigen organischen Fasern schrumpfen und die anorganischen Fasern verformt werden, so dass die flammbeständigen organischen Fasern und die anorganischen Fasern miteinander verschlungen werden und sich ausdehnen,
wobei ein Gehalt der flammbeständigen organischen Fasern an einer Gesamtheit des schallabsorbierenden, wärmeisolierenden Materials 30 bis 70 Massen-% beträgt,
wobei ein mittlerer Faserdurchmesser der anorganischen Fasern 4 μm bis 30 μm beträgt,
wobei eine Raumdichte 0,02 g/cm$^3$ oder weniger beträgt, und
wobei ein mittlerer Faserdurchmesser der flammbeständigen organischen Fasern größer ist als der mittlere Faserdurchmesser der anorganischen Fasern.

2. Schallabsorbierendes, wärmeisolierendes Material nach Anspruch 1, wobei ein Gehalt der anorganischen Fasern an der Gesamtheit des schallabsorbierenden, wärmeisolierenden Materials 20 bis 70 Massen-% beträgt.

3. Schallabsorbierendes, wärmeisolierendes Material nach Anspruch 1 oder 2, wobei ein Leerraumanteil 99% oder mehr beträgt.

4. Schallabsorbierendes, wärmeisolierendes Material nach einem der Ansprüche 1 bis 3, wobei die flammbeständigen organischen Fasern Polyetherimidfasern und die anorganischen Fasern Glasfasern sind.

5. Schallabsorbierendes, wärmeisolierendes Material nach einem der Ansprüche 1 bis 4, wobei auf mindestens einer Seite des schallabsorbierenden, wärmeisolierenden Materials ein schmelzgeblasener Vliesstoff, der eine Dicke von 0,05 mm bis 0,4 mm und ein Flächengewicht von 4 g/m$^2$ bis 80 g/m$^2$ aufweist, bereitgestellt ist.

## Revendications

1. Matériau d'absorption acoustique et d'isolation thermique comprenant: des fibres organiques résistant aux flammes; des fibres inorganiques liées aux fibres organiques résistant aux flammes; et un liant pour lier les unes aux autres les fibres organiques résistant aux flammes et les fibres inorganiques, dans lequel les fibres organiques résistant aux flammes rétrécissent et les fibres inorganiques sont distordues de sorte que les fibres organiques résistant aux flammes et les fibres inorganiques sont entrelacées les unes aux autres et distendues,
dans lequel la teneur en fibres organiques résistant aux flammes, sur base de la totalité du matériau d'absorption thermique et d'isolation thermique va de 30% à 70% en masse,
dans lequel le diamètre moyen de fibre des fibres organiques va de 4 μm à 30 μm, dans lequel la densité en vrac est de 0,02 g/cm$^3$ ou moins, et

dans lequel le diamètre moyen de fibre des fibres organiques résistant aux flammes, est plus grand que le diamètre moyen de fibre des fibres inorganiques.

**2.** Matériau d'absorption acoustique et d'isolation thermique selon la revendication 1, dans lequel la teneur en fibres inorganiques, sur base de la totalité du matériau d'absorption acoustique et d'isolation thermique, va de 20% à 70% en masse.

**3.** Matériau d'absorption acoustique et d'isolation thermique selon la revendication 1 ou 2, dans lequel l'indice des vides est de 99% ou plus.

**4.** Matériau d'absorption acoustique et d'isolation thermique selon l'une quelconque des revendications 1 à 3, dans lequel les fibres organiques résistant aux flammes sont des fibres de polyétherimide et les fibres inorganiques sont des fibres de verre.

**5.** Matériau d'absorption acoustique et d'isolation thermique selon l'une quelconque des revendications 1 à 4, dans lequel au moins un côté du matériau d'absorption acoustique et d'isolation thermique est garni d'un tissu non tissé de fusion-soufflage présentant une épaisseur allant de 0,05 mm à 0,4 mm et un poids de base allant de 4 $g/m^2$ à 80 $g/m^2$.

FIG.1

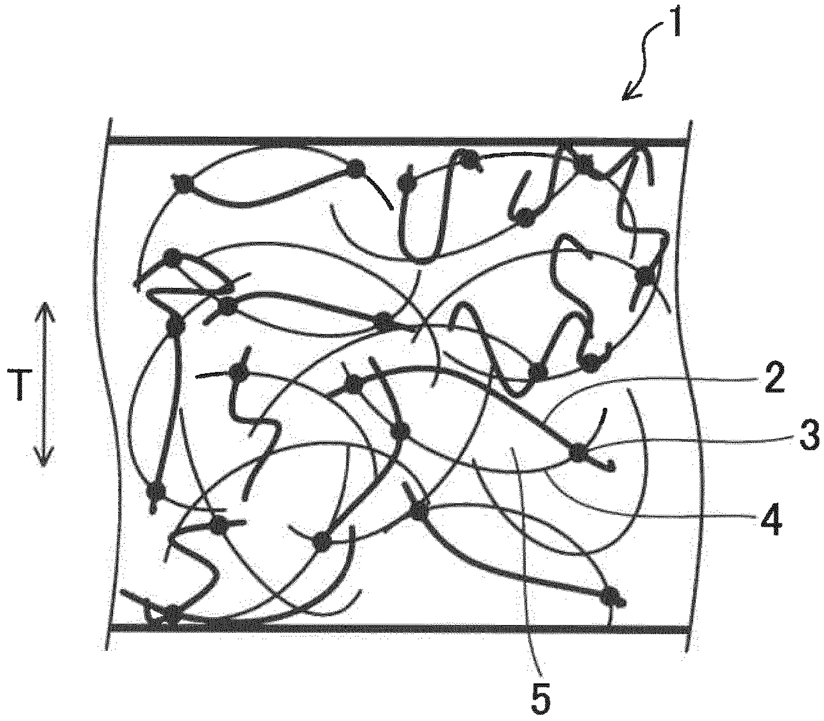


FIG.2

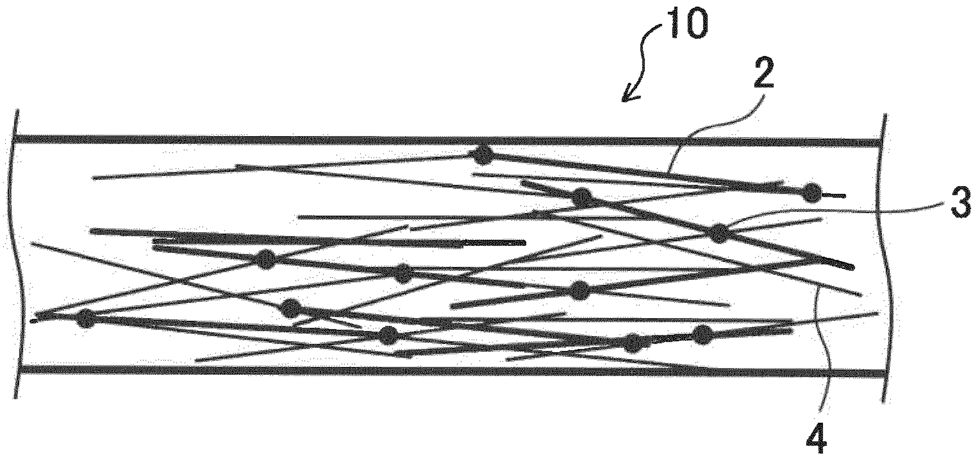

FIG.3

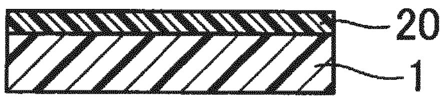


FIG.4

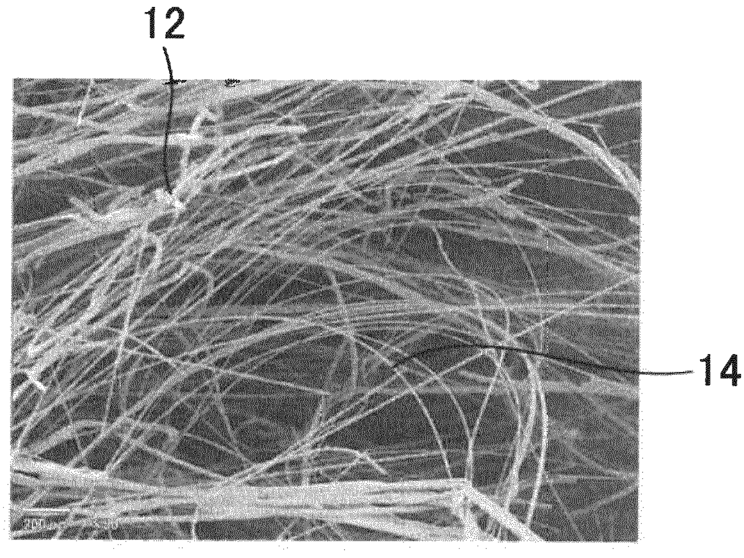

FIG.5

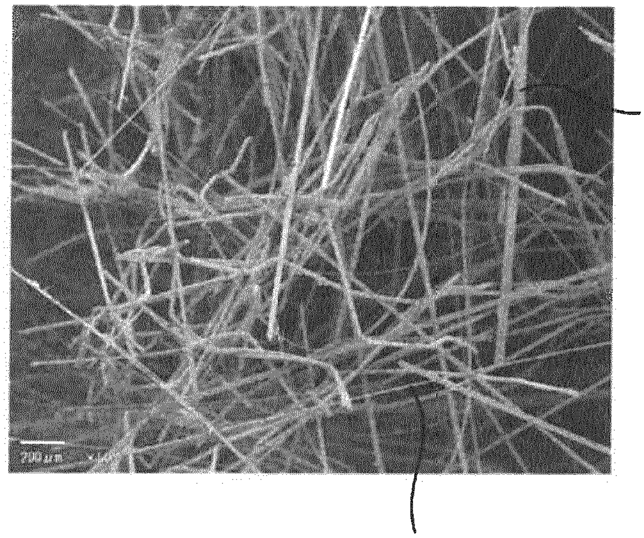
POLYETHERIMIDE FIBERS
GLASS FIBERS

FIG.6

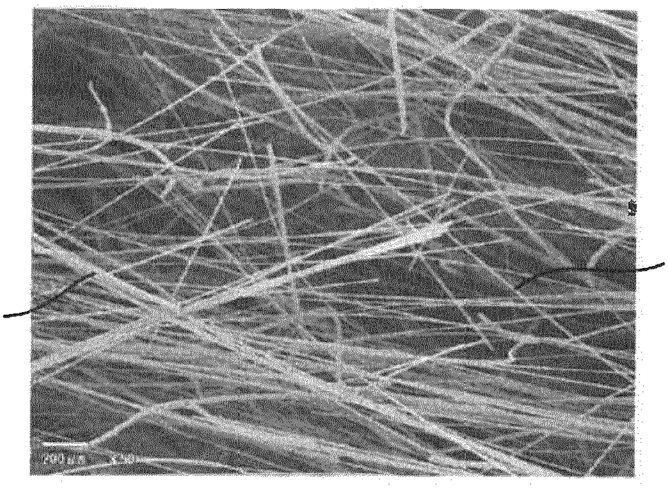
GLASS FIBERS
POLYETHERIMIDE FIBERS

FIG.7

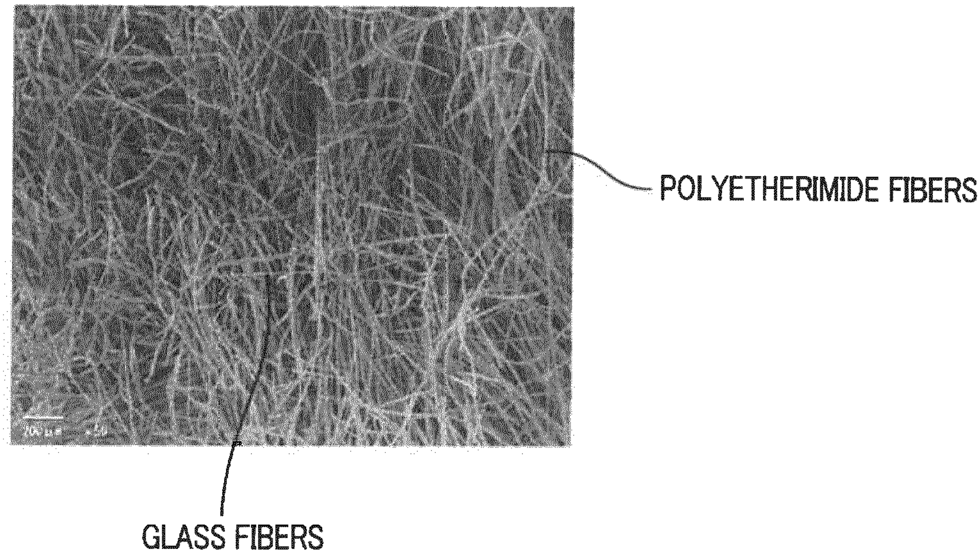

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008018193 A
- JP 5208434 B